# DEMANDE DE BREVET EUROPEEN

(11) **EP 1 688 647 A1**
(43) Date de publication de la demande: **09.08.2006**
(21) Numéro de dépôt: 06300092.1
(22) Date de dépôt: 31.01.2006
(51) Int. Cl.: F16H 57/04

(54) **Dispositif de commande hydraulique de boîte de vitesses et procédé de montage associé**

(30) Priorité: 08.02.2005 FR 0550352
(71) Demandeur: Renault s.a.s., 92100 Boulogne Billancourt (FR)
(72) Inventeur: Buannec, Michel, 78480 Verneuil Sur Seine (FR); Cloud, Philippe, 92500 Rueil Malmaison (FR); Francois, Ludovic, 75017 Paris (FR)
(74) Mandataire: Davies, Owen Robert Treharne

(57) **Abrégé**

Dispositif de commande d'un système de commande hydraulique d'une boîte de vitesses de véhicule automobile à arbres parallèles et à engrenages, comportant une pompe hydraulique (8) et des moyens d'entraînement de celle-ci à partir d'un pignon (1) de la boîte, caractérisé en ce que la pompe (6) est disposée sous le carter de mécanisme (3) et en ce que ses moyens d'entraînement incluent un module d'entraînement (8) fixé sur le carter d'embrayage (2) ainsi qu'un axe d'entraînement (9) traversant le carter de mécanisme (3) pour rejoindre la pompe (6).

## Description

La présente invention se rapporte aux boîtes de vitesses de véhicule automobile comprenant plusieurs arbres parallèles, munis chacun d'une pluralité de pignons.

Elle s'applique notamment sur une boîte de vitesses de véhicule automobile à arbres parallèles munis d'une pluralité de pignons, comprenant deux arbres primaires concentriques reliés alternativement au moteur du véhicule par un premier et un deuxième embrayage, et deux arbres secondaires reliés aux roues du véhicule par un différentiel.

Cette invention trouve ainsi une application privilégiée, mais non limitative, sur les boîtes de vitesses robotisée à arbres primaires concentriques, et à double embrayage d'entrée.

Par la publication DE 198 21 164, on connaît une boîte de vitesses du type indiqué ci-dessus, dite à « double embrayage ». Une telle boîte de vitesses nécessite un système hydraulique de commande d'embrayage, implanté en bout d'arbre primaire. Selon une disposition connue, la pompe est ici entraînée par un axe passant au travers de la ligne d'arbres primaires.

Les contraintes d'encombrement en longueur de la boîte conduisent aujourd'hui à renoncer à cette disposition particulièrement pénalisante à cet égard, pour rechercher d'autres implantations de la pompe et de ses moyens d'entraînement.

Dans ce but, la présente invention propose que la pompe soit disposée sous le carter de mécanisme, et que ses moyens d'entraînement incluent un module d'entraînement fixé sur le carter d'embrayage ainsi qu'un axe d'entraînement traversant le carter de mécanismes pour rejoindre la pompe.

Selon un mode de réalisation particulier de l'invention, le module d'entraînement peut comprendre un pignon mené, entraîné par un pignon primaire de la boîte et relié à l'axe d'entraînement par des pignons de renvoi.

L'axe d'entraînement peut par exemple être engagé au travers d'un manchon solidaire d'un pignon appartenant à la pompe.

D'autres caractéristiques et avantages de la présente invention ressortiront clairement de la description suivante d'un mode de réalisation non limitatif de celle-ci, en se reportant au dessin annexé, sur lequel la figure unique est une coupe simplifiée de la boîte au niveau de la pompe et de ses moyens d'entraînement.

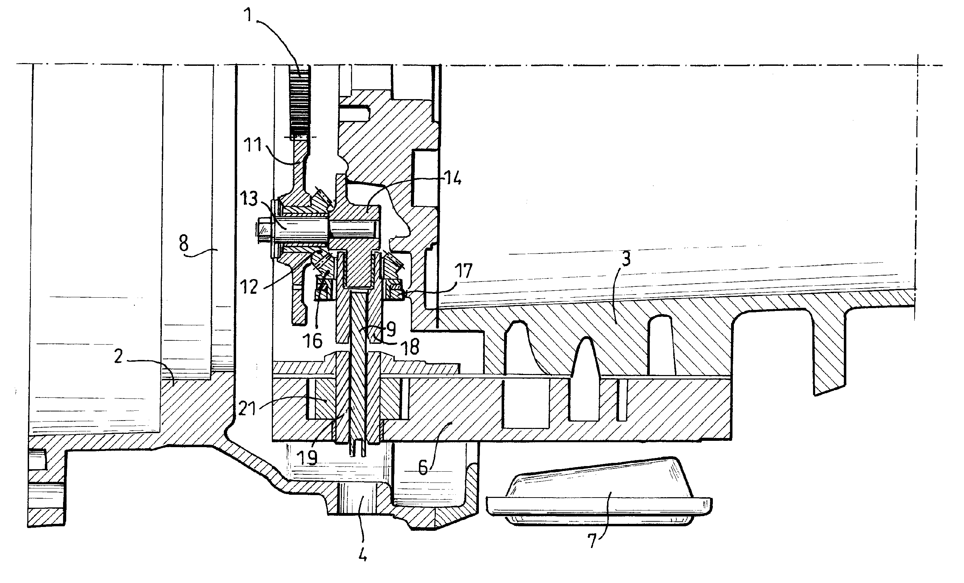

La boîte de vitesses illustrée partiellement par la figure 1 comprend par exemples deux arbres primaires concentriques (non représentés), reliés au moteur du véhicule. Ces arbres primaires portent de façon classique des pignons primaires fixés sur ces derniers. L'un d'eux, appelé pignon menant 1 dans la suite de la description, assure la descente du mouvement de la ligne primaire de la boîte, vers le système de commande hydraulique objet de l'invention.

Sur la figure 1, on a fait apparaître une partie du carter d'embrayage 2, et du carter de mécanisme 3 de la boîte, qui présente notamment un orifice de vidange 4. La pompe 6 est fixée sous la face inférieure du carter des mécanismes 3, et la crépine 7 du circuit hydraulique (non représenté) est aussi disposée sous ce carter.

Conformément à l'invention, le système de commande hydraulique de la boîte inclut un module d'entraînement 8 fixé sur le carter d'embrayage 2, ainsi qu'un axe d'entraînement 9 traversant le carter des mécanismes 3 pour rejoindre la pompe 6

Le module 8 comporte par exemple un pignon mené 11, entraîné directement par le pignon primaire 1. Le pignon mené 11 est fixé par tout moyen (cannelures, frettage, soudure ou autre) sur un pignon conique menant 12 solidaire en rotation d'un axe principal de renvoi horizontal 13 supporté dans le carter d'embrayage 2 par un élément d'appui principal 14. Le pignon conique menant 12 entraîne un pignon conique mené 16, ou pignon de sortie, d'axe vertical lui-même supporté dans le carter 2 par son propre élément d'appui 17. Enfin, le module 8 inclut un premier manchon vertical 18, fixé sur le pignon conique mené 16.

Le dispositif de commande hydraulique objet de l'invention comprend également l'axe d'entraînement 19 de la pompe 6, engagé au travers du premier manchon 18, et d'un deuxième manchon 19 solidaire d'un pignon 21 de la pompe. La fonction de l'axe d'entraînement est d'assurer la liaison entre le module d'entraînement 8 et la pompe 6, en transmettant le mouvement entre le premier manchon 18, solidaire du pignon de renvoi conique 16, et le deuxième manchon 19 solidaire du pignon 21. Le deuxième manchon 19 est engagé au travers du carter de mécanisme 3. Ainsi, l'axe d'entraînement 9 est perpendiculaire à l'axe principal de renvoi 13, coaxial au pignon mené 11. En résumé, le module d'entraînement 8 comprend un pignon mené 11 entraîné par un pignon primaire 1 de la boîte, et relié à l'axe d'entraînement 19 par des pignons de renvoi 12, 16.

Conformément à l'invention, le montage du dispositif de commande hydraulique s'effectue de la façon suivante : on monte la pompe 6 sous le carter de mécanisme 3, et on fixe un module d'entraînement 8 de celle-ci sur le carter d'embrayage 2, avant de relier ces deux sous ensembles par un axe d'entraînement 19 traversant le carter de mécanisme 3. Ainsi, lors du montage, l'axe d'entraînement 19 peut être est introduit dans le dispositif de commande au travers d'un orifice 4 préexistant dans le carter de mécanisme 3, tel qu' un trou de vidange de la boîte.

Une fois monté, l'axe d'entraînement est engagé dans les deux manchons d'entraînement coaxiaux 18, 19, respectivement solidaires d'un élément d'entraînement de la pompe tel que le pignon conique mené 16, et d'un pignon 21 de la pompe 6, de manière à solidariser le module 8 la pompe 6, pour entraîner celle-ci.

L'invention permet donc d'utiliser des trous prévus initialement dans le carter des mécanismes, pour la vidange, l'implantation de capteurs ou autres, en vue de faciliter le montage de l'axe d'entraînement de la pompe. Dans le mode de réalisation non limitatif de l'invention décrit ci-dessus, on tire profit de la présence de trous de vidange judicieusement placé dans le carter des mécanismes, pour monter ou démonter l'axe d'entraînement de la pompe depuis l'extérieur de la boîte.

## Revendications

1. Dispositif de commande hydraulique d'une boîte de vitesses de véhicule à arbres parallèles munie d'une pluralité de pignons disposés dans un carter de mécanisme (3), sur deux arbres secondaires reliés aux roues de véhicule et deux arbres primaires concentriques reliés alternativement au moteur du véhicule par un premier ou un deuxième embrayage situés dans un carter d'embrayage (2), comportant une pompe hydraulique (6) et des moyens d'entraînement de celle-ci à partir d'un pignon (1) de la boîte, **caractérisé en ce que** la pompe est fixée sous le carter de mécanisme, et **en ce que** ses moyens d'entraînement incluent un module d'entraînement (8) fixé sur le carter d'embrayage (2) comprenant un pignon mené (11) entraîné par un pignon primaire de la boîte, et des pignons de renvoi (12, 16), sur un axe d'entraînement (9) traversant le carter de mécanisme (3) pour rejoindre la pompe (6).

2. Dispositif de commande selon la revendication 1, **caractérisé en ce que** l'axe d'entraînement (9) est engagé au travers d'un manchon (19) solidaire d'un pignon (21) de la pompe (6).

3. Dispositif de commande selon la revendication 2, **caractérisé en ce que** le manchon (19) est engagé au travers du carter de mécanisme (3).

4. Dispositif de commande selon la revendication 1, 2 ou 3, **caractérisé en ce que** le module d'entraînement (8) présente un axe principal (13) coaxial au pignon mené (11), qui est perpendiculaire à l'axe d'entraînement (9).

5. Dispositif de commande selon l'une des revendications précédentes, **caractérisé en ce que** l'axe d'entraînement (9) transmet le mouvement entre un premier manchon (18) solidaire d'un pignon de renvoi du module d'entraînement et un deuxième manchon (19) solidaire d'un pignon (21) de la pompe (6).

6. Procédé de montage d'un dispositif de commande d'un système de commande hydraulique d'une boîte de vitesses de véhicule automobile à arbres parallèles et à engrenages, **caractérisé en ce qu'**on monte la pompe (6) sous le carter de mécanisme (3) et **en ce qu'**on fixe un module d'entraînement (8) de celle-ci sur le carter d'embrayage (2), avant de relier ces deux sous-ensembles par un axe d'entraînement (9) traversant le carter de mécanisme (3).

7. Procédé de montage selon la revendication 6, **caractérisé en ce que** l'axe d'entraînement (9) est introduit dans le dispositif de commande au travers d'un orifice (4) préexistant dans le carter de mécanisme (3).

8. Procédé selon la revendication 7, **caractérisé en ce que** l'orifice (4) est un trou de vidange de la boîte.

9. Procédé de montage selon la revendication 7, **caractérisé en ce que** l'axe d'entraînement (19) est engagé dans deux manchons d'entraînement (18, 19) coaxiaux, respectivement solidaires d'un élément d'entraînement (16) de la pompe et d'un pignon (21) de celle-ci, de manière à solidariser la pompe (6) de son module d'entraînement (8).
